Europäisches Patentamt

**European Patent Office**

**Office européen des brevets**

(11) Veröffentlichungsnummer: **0 262 478 B1**

# (12) EUROPÄISCHE PATENTSCHRIFT

(45) Veröffentlichungstag der Patentschrift: **21.08.91**

(51) Int. Cl.⁵: **H04J 3/06**

(21) Anmeldenummer: **87113202.3**

(22) Anmeldetag: **09.09.87**

(54) **Verfahren zur Rahmensynchronisierung der Vermittlungsstelle eines PCM-Zeitmultiplex-Fernmeldesystems.**

(30) Priorität: **29.09.86 DE 3633062**

(43) Veröffentlichungstag der Anmeldung:
**06.04.88 Patentblatt 88/14**

(45) Bekanntmachung des Hinweises auf die
Patenterteilung:
**21.08.91 Patentblatt 91/34**

(84) Benannte Vertragsstaaten:
**AT BE CH DE FR GB IT LI NL SE**

(56) Entgegenhaltungen:
**EP-A- 0 161 177**
**GB-A- 2 048 617**
**US-A- 3 539 997**

(73) Patentinhaber: **Siemens Aktiengesellschaft**
**Wittelsbacherplatz 2**
**W-8000 München 2(DE)**

(72) Erfinder: **Schuster, Bernd, Dipl.-Ing.**
**Fasanenstrasse 108**
**W-8025 Unterhaching(DE)**
Erfinder: **Martin, Horst, Dipl.-Phys.**
**Simmerleinplatz 11**
**W-8000 München 50(DE)**

EP 0 262 478 B1

**Beschreibung**

Die Erfindung betrifft ein Verfahren zur Rahmensynchronisierung der Vermittlungsstelle eines PCM-Zeitmultiplex-Fernmeldesystems, demgemäß der Rahmenbeginn des die Informationskanäle erfassenden Zeitrahmens aus dem bei der Vermittlungsstelle ankommenden seriellen Datenstrom durch Überwachung auf das periodische Auftreten eines Rahmenbeginnwortes ermittelt wird, das durch Überrahmenbildung aus jeweils an Pulsrahmenanfängen gesendeten Beginnbits gebildet ist.

Ein gemäß der Patentanmeldung GB 2 048 617 A bekanntes Verfahren zur Rahmensynchronisierung eines digitalen Kommunikationssystems besteht darin, die ankommenden Bits einer Rahmenlänge nacheinander mit jeweils einem Synchronisationsbit eines Synchronisationsmusters zu vergleichen, das innerhalb des Synchronisationsmusters eine bestimmte numerische Ordnung aufweist. An denjenigen Bitstellen, an denen der Vergleich eine Übereinstimmung zwischen Datenbits und Synchronisationsbits ergibt, wird das jeweilige Datenbit des nächstfolgenden Rahmens mit einem Synchronisationsbit der nächsthöheren Ordnung verglichen, während an denjenigen Bitstellen an denen sich keine Übereinstimmung ergibt der Vergleich wieder mit dem Synchronisationsbit der niedrigsten Ordnung begonnen wird. Die genannte Verfahrensweise wird dabei solange fortgesetzt, bis an einer Bitstelle der Vergleich eines Datenbits mit dem höchstrangigen Synchronisationsbit des Synchronisationsmusters erfolgt und Übereinstimmung ergibt, worauf die eigentliche Rahmensynchronisierung an dieser Bitstelle erfolgt.

Bei Fernmeldesystemen der obengenannten Art muß die Rahmensynchronisierung, d.h. die zeitliche Zuordnung des Betriebs der Empfangseinrichtungen der Vermittlungsstelle zu den Pulsrahmenanfängen möglichst schnell erfolgen. Es muß dabei verhindert sein, daß ein durch Sprachdaten simuliertes Rahmenbeginnwort zu einer solchen, in diesem Falle falschen Synchronisierung führt.

Die Aufgabe der Erfindung besteht darin, ein Synchronisierverfahren anzugeben, das diesen Anforderungen genügt, und das darüber hinaus mit Hilfe einer Schaltungsanordnung realisiert werden kann, die kompakt aufgebaut ist und insbesondere sich in integrierter Schaltkreistechnik ausführen läßt.

Erfindungsgemäß wird diese Aufgabe mit einem Verfahren der eingangs genannten Art gelöst, das dadurch gekennzeichnet ist, daß in die Überwachung jeweils die Bits so vieler eine Rahmengruppe bildende Rahmen einbezogen werden, wie zwischen zwei aufeinanderfolgenden Bits eines gültigen Rahmenbeginnwortes innerhalb des seriellen Datenstroms liegen, daß für jede Bitstelle einer solchen Rahmengruppe unter Einbeziehung der Bits so vieler gleichgeordneter Bitstellen mehrerer aufeinanderfolgender Rahmengruppen, daß auf Grund der gegebenen Binärwertkombination des Rahmenbeginnwortes entschieden werden kann, ob diese Bits als Bestandteil eines Rahmenbeginnwortes infrage kommen oder nicht, je nach vorliegender Bitkombination entweder festgestellt wird, daß diese Bitstelle nicht der Rahmenanfang ist und eine entsprechende Markierung vorgenommen wird oder aber der auf dieser Bitstelle in der nachfolgenden Rahmengruppe zu erwartende Binärwert ermittelt und mit dem tatsächlich auftretenden Binärwert verglichen wird, daß diese Prozedur bezogen auf die noch nicht mit einer solchen Markierung versehenen Bitstellen solange wiederholt wird, bis von dieser Markierung nur noch eine Bitstelle nicht betroffen ist, und daß, diese Prozedur für diese als letzte nicht markierte Bitstelle vorzugsweise noch mehrmals wiederholt wird, bevor die Empfangseinrichtung der Vermittlungsstelle auf diese Bitstelle als Rahmenanfang aufsynchronisiert wird.

Beim erfindungsgemäßen Verfahren wird ein richtiges Rahmenbeginnwort durch eine rekursive Prozedur gefunden, die sich, wie noch erläutert werden wird, mit Hilfe eines FIFO-Speichers realisieren läßt.

Gemäß einer weiteren Ausgestaltung der Erfindung wird angegeben, wie zu verfahren ist, wenn bei dem Suchvorgang zunächst sämtliche Bitstellen mit einer Markierung versehen sind, also als nicht für den Rahmenanfang infrage kommend bezeichnet sind. Es wird dann nämlich eine neue Datenmenge in einen derartigen FiFO-Speicher eingeladen und auf der Basis dieser Datenmenge die Prozedur wiederholt.

Noch eine andere Ausgestaltung der Erfindung betrifft den Sonderfall, daß zunächst noch über eine längere Zeitspanne hinweg mehreren Bitstellen als für einen Rahmenanfang infrage kommend bezeichnet sind. Es wird dann in einer Art vorläufigen Synchronisierung eine dieser Bitstellen zum Rahmenanfang erklärt und anderweitig geprüft, ob dieser Rahmenanfang gültig ist. Sofern dies nicht der Fall ist, wird diese Bitstelle markiert und ein erneuter Synchronisierungsversuch mit einer weiteren dieser noch nicht markierten Bitstellen unternommen. Der Vorgang wiederholt sich, bis schließlich endgültig der richtige Rahmenanfang gefunden worden ist.

Schließlich zielt noch eine andere Ausgestaltung der Erfindung auf eine Schaltungsanordnung zur Durchführung des erfindungsgemäßen Verfahrens, die den vorgenannten Anforderungen für eine kompakte Realisierung in Form einer integrierten Schaltung gerecht wird.

Nachstehend wird die Erfindung anhand eines Ausführungsbeispiels unter Bezugnahme auf die Figuren näher erläutert.

Die Figuren zeigen:

Fig. 1 eine Rahmenstruktur, wie sie zur Erläuterung der Erfindung als Beispiel angenommen ist,

Fig. 2 in strukturierter Darstellung einen auf eine Bitstelle bezogenen Teil der erfindungsgemäßen Schaltungsanordnung,

Fig. 3 die vollständige erfindungsgemäße Schaltungsanordnung.

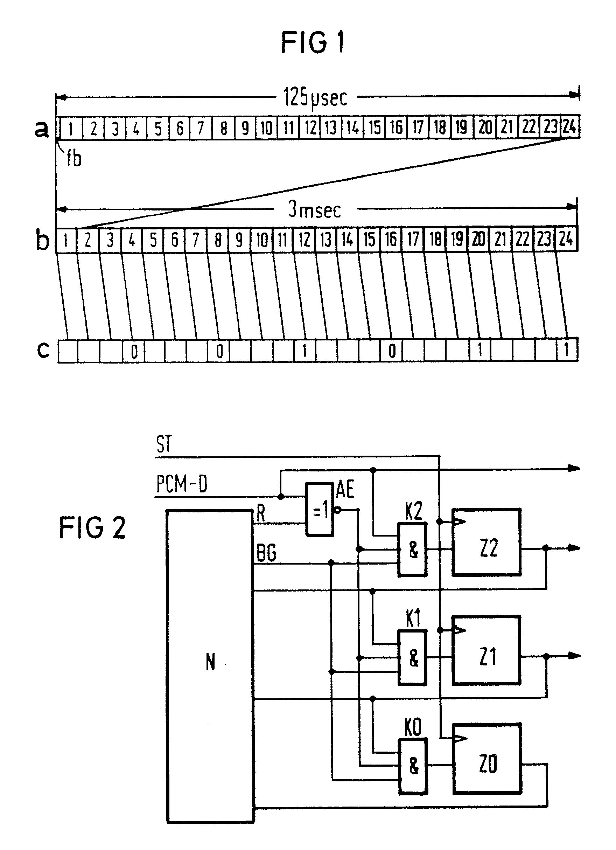

In der Figur 1 ist in Zeile a) ein Abtastpulsrahmen eines PCM-Zeitmultiplex-Fernmeldesystems dargestellt. Er nimmt 125 μs ein und umfaßt Zeitspannen für 24 Sprachkanäle, die jeweils acht Bit zur Darstellung einer Sprachabtastprobe und gegebenenfalls auch zur Signalisierung beinhalten.

Der Zeitspanne für den ersten Sprachkanal ist beim Rahmenbeginnbit fb vorangestellt, womit ein solcher Pulsrahmen insgesamt $24 \times 8 + 1 = 193$ Bits umfaßt.

In Zeile b) der Figur 1 ist ein Überrahmen dargestellt, der 24 solcher in Zeile a) dargestellter Rahmen umfaßt. Die stark ausgezogenen senkrechten Striche veranschaulichen dabei Bitzeitspannen, die entsprechend der Zeitspanne für das Rahmenbeginnbit fb in Zeile a) andere Informationen als Sprachinformationen enthalten.

Wie in Zeile c) angedeutet, ist jedoch lediglich bei jedem vierten Zeitrahmen diese zusätzliche Bitzeitspanne für die Übertragung eines Rahmenbeginnbits ausgenutzt, die übrigen derartigen Zeitspannen dienen der Übertragung von anderen Signalisierinformationen. Wie sich ebenfalls aus der Zeile c) ergibt, ist mit den sich alle vier Pulsrahmen wieder-holenden Rahmenbeginnbits innerhalb des 24 Rahmen umfassenden Überrahmens ein Rahmenbeginnwort gebildet, das im konkreten Fall die Binärwortkombination 001011 aufweist.

Die Aufgabe des erfindungsgemäßen Verfahrens besteht nun darin, aus einem bei einer Vermittlungsstelle eines PCM-Zeitmultiplex-Fernmeldesystems ankommenden Datenstrom, der in der geschilderten Weise in Pulsrahmen auftritt, das Rahmenbeginnwort zu erkennen, um die Vermittlungsstelle auf den Rahmenbeginn aufsynchronisieren zu können. Aus dem Zustand des Asynchronismus heraus beginnt ein solcher Synchronisiervorgang an einer beliebigen Stelle innerhalb eines derartigen Datenstroms. Wegen der Wiederholung von Rahmenbeginnbits jeweils im Abstand von vier Rahmen muß daher der Inhalt von vier solcher Rahmen in die Überwachung einbezogen werden. Zur Veranschaulichung des der Erfindung zugrundeliegenden Prinzips werden anhand der Figur 2 jedoch zunächst die Vorgänge erläutert, die sich im Zusammenhang mit einer einzigen Bitstelle bei der Überprüfung des Datenstroms abspielen.

Bei der gemäß Figur 1, Zeile c) angenommenen Binärwertkombination eines Rahmenbeginnwortes müssen wenigstens drei aufeinanderfolgende Bits bekannt sein, um entscheiden zu können, ob die betreffende Bitkombination als Bestandteil des Rahmenbeginnwortes infrage kommt oder nicht.

Gemäß Figur 2 sind daher drei Speicher ZO bis Z2 vorgesehen, in die Bits einer bestimmten Bitstelle jeweils im Abstand von vier Pulsrahmen annimmt, nacheinander eingetragen werden. Wenn mit Auftreten des nachfolgenden Streckentaktes ST Bits dieser Binärwerte aus den Speichern ZO bis Z2 ausgelesen werden, gelangen sie an ein Netzwerk N, in dem durch entsprechende Verknüpfung auf der Basis der festgelegten bestimmten Binärwertkombination eines richtigen Rahmenbeginnwortes einerseits festgestellt wird, ob die empfangene Bitkombination eine gültige Bitkombination ist, in welchem Falle an dem Ausgang BG ein entsprechendes Signal abgegeben wird, und andererseits ermittelt wird, welchen Binärwert das nächste Bit eines gültigen Rahmenbeginnwortes haben müßte. Ein Signal dieses Binärwerts gelangt als Referenzsignal über den Ausgang R des Netzwerkes an den einen Eingang einer Äquivalenzschaltung AE, an deren anderen Eingang die im Datenstrom auftretenden Bits gelangen. Wenn die betrachtete Bitstelle vier Pulsrahmen später den erwartenden Binärwert annimmt, gibt die Äquivalenzschaltung zusammen mit dem vom Ausgang BG des Netzwerks N gelieferten Gültigkeitssignal die Koinzidenzglieder KO bis K2 frei. Dies hat zur Folge, daß einerseits über das Koinzidenzglied K2 nunmehr das aktuelle Bit in den Speicher Z2 gelangen kann, andererseits der bisherige Inhalt des Speichers Z2 über das Koinzidenzglied K1 in den Speicher Z1 und der bisherige Inhalt des Speichers Z1 über das Koinzidenzglied KO in den Speicher ZO gelangen kann. Der Inhalt des Speichers ZO geht verloren. Die geschilderten Vorgänge wiederholen sich nun mit dem aktuellen Inhalt der Speicher ZO bis Z2.

Sollte dabei festgestellt werden, daß die entsprechende Binärwertkombination in einem gültigen Rahmenbeginnwort nicht vorkommt, dann wird über den Ausgang BG des Netzwerkes ein Sperrsignal für die Koinzidenzglieder KO bis K2 ein Löschsignal abgegeben, das bewirkt, daß in die Speicher ZO bis Z2 die Binärwertkombination 000 eingeschrieben wird, wobei dafür gesorgt ist, daß diese Kombination unabhängig von nachfolgenden Bits dieser Bitstelle erhalten bleibt, womit diese Bitstelle endgültig als Rahmenbeginn ausgeschlossen ist.

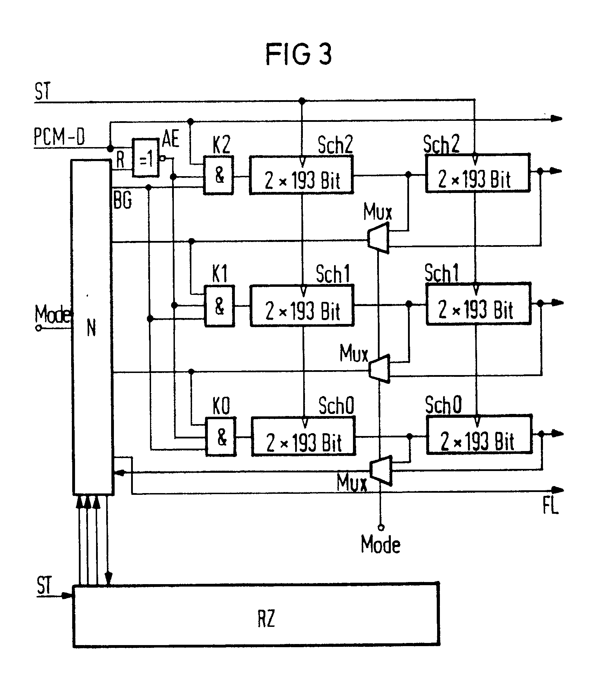

Die aufeinanderfolgende Behandlung sämtlicher Bitstellen der vier Pulsrahmen umfassenden Rahmengruppe mit der Anordnung gem. Fig. 2 würde zuviel Zeit erfordern. Für die tatsächliche Realisierung kommt eine Schaltungsanordnung infrage, wie sie in Fig. 3 dargestellt ist. Diese Anordnung weist entsprechend den drei Speichern ZO bis Z2 gem. Fig. 2 drei Schieberegistgerspeicher Sch 0 bis Sch 2 auf, die jeweils so viele Stufen aufweisen, wie sich Bitstellen in dem betrachteten Zeitfenster von vier Pulsrahmen befinden. Bei der Darstellung gem. Fig. 3 sind diese Schieberegister in zwei Teile unterteilt, die jeweils 2 × 193 Stufen aufweisen, womit diese Schaltungsanordnung nicht nur für die erläuterten Verhältnisse geeignet ist, bei denen die Bits des Rahmenbeginn-wortes sich alle vier Pulsrahmen wiederholen, sondern auch dann, wenn auf Rahmenbeginnworte zu prüfen ist,deren Bits sich alle zwei Pulsrahmen wiederholen.

Entsprechend der Darstellung in Fig. 2 sind die Ausgänge der Schieberegister gem.Fig.3 zum einen an einen zugeordneten Eingang eines Netzwerkes N und zum anderen an einen Eingang des jeweils zugeordneten Koinzidenzgliedes KO bis K2 geführt. Die Ausgänge der beiden Teile der Schieberegister sind dabei über Multiplexer MUX zusammengefaßt, die aufgrund eines Steuersignals "Mode" entweder Ausgangssignale der einen oder der anderen Hälfte durchlassen. Die Anordnung und Funktion der Äquivalenzschaltung AE ist dieselbe wie bei der Anordnung gem. Fig. 2.

Die ganze Schaltungsanordnung steht unter dem Steuereinfluß eines Rahmenzählers RZ.

Mit der Schaltungsanordnung gem. Fig. 3 liegen praktisch 772 Schaltungsanordnungen vor, wie sie Fig.2 zeigt, wobei innerhalb eines Zeitfensters von vier Pulsrahmen bzw. 772 Bit jeweils um eine Bitzeitspanne versetzt die einzelnen Bitstellungen überprüft werden, indem unter dem Einfluß des Streckentaktes die Binärwerte dieser Bitsstellen nacheinander an das Schieberegiste ende geschoben werden und dann die entsprechende Behandlung erfahren.

Wenn der so überprüfte Bitstrom tatsächlich ein Rahmenbeginnwort enthält, wird im Zuge des geschilderten Rekursivprozesses schließlich nur noch eine Bitstelle übrig bleiben, die nicht als für ein Rahmenbeginnwort ungültige Bitstelle markiert ist. Diese eine Bitstelle wird dann, wie schon dargelegt noch mehrmals auf ihre Gültigkeit geprüft und dann als Rahmenbeginn erklärt, woraufhin die Schaltungsanordnung ein Synchronisiersignal FL zur Aufsynchronisierung der Empfangseinrichtung der Vermittlungsstelle auf den Rahmenbeginn abgibt.

Wenn jedoch sämtliche Bitstellen mit einer Markierung versehen worden sind, werden die drei Schieberegister wie zu Beginn der Prozedur erneut mit den Bits aus 3 × 4 Rahmen geladen, woraufhin die Überprüfungsphase zum Auffinden eines Rahmenkennungswortes von vorne beginnt.

Sollte über längere Zeit hinweg bei mehreren Bitstellen eine Markierung ausbleiben, so kann gemäß einer Variante des erfindungsgemäßen Verfahrens obwohl der Rahmenanfang dann noch nicht sicher feststeht, zunächst eine der Bitstellen zum Rahmenanfang erklärt und eine Synchronisation vorgenommen werden. Die Richtigkeit dieser Bitstellung wird dann mit Hilfe einer anderen Einrichtung überprüft. Sollte sie sich nicht bestätigen, so wird die betreffende Bitstelle markiert und mit einer weiteren der betrachteten Bitstellen ein Synchronisierungsversuch unternommen, bis schließlich unter diesen verbliebenen Bitstellen diejenige gefunden ist, die tatsächlich den Rahmenanfang darstellt.

## Patentansprüche

1. Verfahren zur Rahmensynchronisierung der Vermittlungsstelle eines PCM-Zeitmultiplex-Fernmeldesystems, demgemäß der Rahmenbeginn des die Informationskanäle umfassenden Zeitrahmens aus dem bei der Vermittlungsstelle ankommenden seriellen Datenstrom durch Überwachung auf das periodische Auftreten eines Rahmenbeginnwortes ermittelt wird, das durch Überrahmenbildung aus jeweils an Rahmenanfängen gesendeten Beginnbits gebildet ist,

**dadurch gekennzeichnet, daß**

in die Überwachung jeweils die Bits so vieler eine Rahmengruppe bildende Rahmen einbezogen werden, wie zwischen zwei aufeinanderfolgenden Bits eines gültigen Rahmenbeginnwortes innerhalb des seriellen Datenstroms liegen,

daß für jede Bitstelle einer solchen Rahmengruppe unter Einbeziehung der Bits so vieler gleichgeordneter Bitstellen mehrerer aufeinanderfolgender Rahmengruppen, daß aufgrund der gegebenen Binärwertkombination des Rahmenbeginnwortes entschieden werden kann, ob diese Bits als Bestandteil eines Rahmenbeginnwortes infrage kommen oder nicht, je nach vorliegender Bitkombination entweder festgestellt wird, daß diese Bitstelle nicht der Rahmenanfang ist und eine entsprechende Markierung vorgenommen wird, oder aber der auf dieser Bitstelle in der nachfolgenden Rahmengruppe zu erwartende Binärwert ermittelt und mit dem tatsächlich auftretenden Binärwert verglichen wird, daß diese Prozedur bezogen auf die noch nicht mit einer solchen Markierung versehenen Bitstellen solange wiederholt wird, bis von dieser Markierung nur noch eine Bitstelle nicht betroffen ist, und daß, diese Prozedur für diese als letzte nicht markierte Bitstelle vorzugsweise noch mehrmals wiederholt wird, bevor die Empfangseinrichtung der Vermittlungsstelle auf diese Bitstelle als Rahmenanfang aufsynchronisiert wird.

2. Verfahren nach Anspruch 1,
   **dadurch gekennzeichnet**, daß,
   sofern bei der genannten Prozedur sämtliche Bitstellen mit einer Markierung versehen worden sind, diese Prozedur erneut begonnen wird, wobei solche Teile des Datenstroms überwacht werden, die bisher noch nicht einbezogen waren.

3. Verfahren nach Anspruch 1,
   **dadurch gekennzeichnet**, daß,
   sofern über längere Zeitspannen hinweg mehrere Bitstellen ohne eine Markierung bleiben, zunächst auf eine dieser Bitstellen als Rahmenanfang aufsynchronisiert wird und danach die Gültigkeit dieser Bitstelle anderweitig überprüft wird, daß, sofern dabei die Bitstelle sich als ungültig erweist, sie mit einer Markierung versehen und erneut auf eine weitere nicht mit einer Markierung versehene Bit-stelle aufsynchronisiert wird, und daß dieser Vorgang solange wiederholt wird, bis eine gültige Bitstelle als Rahmenanfang gefunden ist.

4. Schaltungsanordnung zur Durchführung des Verfahrens nach einem der vorhergehenden Ansprüche,
   **gekennzeichnet durch**
   eine der Anzahl der berücksichtigten Rahmengruppen gleiche Anzahl von mit dem Streckentakt (ST) des ankommenden Datenstroms (PCM-D) weitergeschalteten Schieberegistern (SCH0 bis SCh2) mit Jeweils der Anzahl der Bits einer Rahmengruppe gleicher Stufenzahl, deren in einer Reihenfolge erstem Schieberegister (Sch2) als Eingangsinformation die Bits des ankommenden Datenstroms (PCM-D) und deren übrigen Schieberegister die aus der letzten Stufe des jeweils in der Reihenfolge vorhergehenden Schieberegisters (Sch2, Sch1) ausgelesenen Bits als Eingangsinformation zugeführt werden, durch ein Verknüpfungsnetzwerk (N), dem die aus den letzten Stufen der Schieberegister (Sch0 bis Sch2) ausgelesenen Bits als Eingangsgrößen zugeführt werden, und daß daraus entsprechend der gegebenen Binärwertkombination eines Rahmenbeginnwortes, sofern die Binärwertkombination der Eingangsgrößen als Bestandteil des Rahmenbeginnwortes infrage kommt, ein Referenzbit (R) mit dem zu erwartenden Binärwert des nächsten Bits des Rahmenbeginnwortes abgibt bzw., sofern dies nicht der Fall ist, ein Löschsignal (BG) abgibt, durch eine Äquivalenzschaltung (AE), die das genannte Referenzbit (R) mit dem jeweils aktuellen Bit des Datenstroms (PCM-D) vergleicht, durch jeweils ein den Schieberegistern (SCH0 bis SCH2) zugeordnetes Koinzidenzglied (K0 bis K2), dem das Löschsignal (BG), das Ausgangssignal der Äquivalenzschaltung (AE) und die Bits des Datenstroms (PCM-D) zugeführt werden, und dessen Ausgangssignal das Eingangssignal des zugeordneten Schieberegisters ist, sowie durch einen Zähler (RZ) zur zeitgerechten Steuerung des Netzwerks (N).

**Claims**

1. Method for frame synchronisation of the exchange of a PCM time-division multiplex telecommunication system, in accordance with which the frame start of the time frame comprising the information channels is determined from the data stream arriving serially at the exchange by monitoring for the periodic occurrence of a frame start word formed by formation of superframes from start bits transmitted at the start of the frames in each case, characterised in that in each case the bits of as many frames forming a frame group as lie between two successive bits of a valid frame start word within the serial data stream are included in the monitoring, in that it is determined, depending on the bit combination present, for each bit position of such a frame group, including the bits of as many bit positions, of the same significant value, of a plurality of successive frame groups that it is possible to decide on the basis of the given binary value combination of the frame start word whether these bits may form part of a frame start word or not, either that this bit position is not the frame start and a corresponding flagging is performed, or else that the binary value to be expected at this bit position in the subsequent frame group is determined and compared with the binary value actually occurring, in that this procedure is repeated with regard to the bit positions not yet provided with such a flag until only one bit position is not affected by this flagging, and in that this procedure is preferably repeated several times more for this last unflagged bit position before the receiving device of the exchange is synchronised with this bit position as the frame start.

2. Method according to Claim 1, characterised in that, insofar as all bit positions have been provided with a flag, this procedure is begun anew, those parts of the data stream which have hitherto not been included being monitored during the aforesaid procedure.

3. Method according to Claim 1, characterised in that insofar as a plurality of bit positions remain unflagged over relatively long periods of time, first of all synchronisation is carried out with one of these bit positions as frame start and thereafter the validity of this bit position is tested elsewhere, in that, insofar as the bit position thereby proves to be invalid, it is provided with a flag and synchronisation takes place with a further unflagged bit position once more, and in that this process is repeated until a valid bit position has been found as frame start.

4. Circuit arrangement for carrying out the method according to one of the preceding claims, characterised by a number of shift registers (Sch0 to Sch2) shifted on with the route clock (ST) of the incoming data stream (PCM-D) equal to the number of frame groups included, said shift registers having in each case the same number of stages as the number of bits of a frame group, the first shift register (Sch2) of which in a sequence is fed the bits of the incoming data stream (PCM-D) as input information, and the other shift registers of which are fed the bits read out from the last stage of the previous shift register (Sch2, Sch1) in the sequence in each case as input information, by a combinative network (N) to which the bits read out of the last stages of the shift registers (Sch0 to Sch2) are fed as input values and that (sic) from this, in accordance with the given binary value combination of a frame start word, insofar as the binary value combination of the input values may form part of the frame start word, outputs a reference bit (R) with the binary value expected for the next bit of the frame start word or, insofar as this is not the case, outputs an erase signal (BG), by an equivalence circuit (AE) which compares the aforesaid reference bit (R) with the respective current bit of the data stream (PCM-D), by in each case a coincidence element (K0 to K2) associated with the shift registers (Sch0 to Sch2), to which coincidence element the erase signal (BG), the output signal of the equivalence circuit (AE) and the bits of the data stream (PCM-D) are fed, and the output signal of which is the input signal of the associated shift register, as well as by a counter (RZ) for correct time control of the network (N).

**Revendications**

1. Procédé pour réaliser la synchronisation de trame du central d'un système de télécommunication MIC à multiplexage temporel, selon lequel on détermine le début de la trame temporelle englobant les canaux d'informations à partir du flux en série de données, qui arrive dans le central, au moyen du contrôle de l'apparition périodique d'un mot de début de trame, qui est formé lors de la formation d'une trame de rang supérieur, respectivement à partir de bits de départ émis au début des trames, caractérisé par le fait que, lors du contrôle, on insère les bits d'autant de trames formant un groupe de trames, qu'il en existe entre deux bits successifs d'un mot de début de trame valable dans le flux de données en série, que pour chaque position binaire d'un tel groupe de trames, et moyennant l'insertion des bits d'un nombre de positions binaires de même rang de plusieurs groupes successifs de trames, sur la base de la combinaison indiquée des valeurs binaires du mot de début de trame, on peut déterminer si ces bits font partie ou non d'un mot de début de trame, et si en fonction de la combinaison binaire présente, on peut déterminer que cette position binaire n'est pas le début de la trame et qu'on réalise un marquage correspondant, ou bien on détermine la valeur binaire à laquelle on doit s'attendre dans cette position binaire dans le groupe suivant de trames et on la compare à la valeur binaire effectivement apparue, qu'on répète cette procédure rapportée aux positions binaires non encore pourvues d'un tel marquage, jusqu'à ce que seule encore une position binaire ne soit pas concernée par ce marquage, et qu'on répète de préférence encore une fois cette procédure pour cette position binaire non marquée comme étant la dernière, avant que le dispositif de réception du central soit synchronisé sur cette position binaire en tant que début de trame.

2. Procédé suivant la revendication 1, caractérisé par le fait que dans la mesure où, lors de ladite procédure, toutes les positions binaires ont été affectées d'une marque, cette procédure est à nouveau déclenchée, auquel cas on contrôle des parties du flux de données qui n'étaient pas encore incluses auparavant.

3. Procédé suivant la revendication 1, caractérisé par le fait que dans la mesure où plusieurs positions binaires subsistent sans marquage pendant des intervalles de temps assez longs, on réalise tout d'abord la synchronisation sur l'une de ces positions binaires en tant que début de trame, puis on contrôle par ailleurs la validité de cette position binaire, que, dans la mesure où cette position binaire s'avère non valable, on lui affecte une marque et on réalise à nouveau la synchronisation sur une autre position binaire non pourvue d'une marque, et qu'on répète ce processus jusqu'à ce que l'on ait trouvé une position binaire valable en tant que début de trame.

4. Montage pour la mise en oeuvre du procédé suivant l'une des revendications précédentes, caractérisé par un nombre, identique au nombre des groupes de trames pris en compte, de registres à décalage (SCH0 à SCh2), dans lesquels le transfert s'effectue à la cadence de sections (ST) du flux de données (PCM-D) arrivant, et comportant un nombre d'étages identique au nombre des bits d'un groupe de trames, registres à décalage dans lesquels successivement les bits du flux de données d'arrivée (PCM-D) sont envoyés en tant qu'information d'entrée au premier registre à décalage (Sch2) et les bits lus à partir du dernier étage du registre à décalage (Sch2, Sch1) respectivement précédent dans la série, sont envoyés aux autres registres à décalage en tant qu'information d'entrée, et par un réseau combinatoire (N), auquel les bits lus dans les derniers étages de registres à décalage (Sch0 à Sch2) sont envoyés en tant que grandeur d'entrée, et qui, à partir de là, en fonction de la combinaison donnée des valeurs binaires d'un mot de début de trame, délivre un bit de référence (R) possédant la valeur binaire, à laquelle on doit s'attendre, du bit immédiatement suivant du mot de début de trame, dans la mesure où la combinaison de valeurs binaires des grandeurs d'entrée est utilisée comme partie constitutive du mot de début de trame et, lorsque ce n'est pas le cas, délivre un signal d'effacement (BG), et par un circuit coïncidant (AE), qui compare ledit bit de référence (R) au bit respectivement actuel du flux de données (PCM-D), et par un circuit à coïncidence respectif (K0 à K2), qui est associé aux registres à décalage (SCH0 à SCH2) et auquel sont envoyés le signal d'effacement (BG), le signal de sortie du circuit à équivalence (AE) et les bits du flux de données (PCM-D) et dont le signal de sortie constitue le signal d'entrée du registre à décalage associé, ainsi que par un compteur (RZ) servant à réaliser la commande en temps opportun du réseau (M).

# FIG 1

# FIG 2

# FIG 3